# EUROPÄISCHE PATENTANMELDUNG

(11) **EP 1 637 816 A1**
(43) Veröffentlichungstag der Anmeldung: **22.03.2006**
(21) Anmeldenummer: 05108198.2
(22) Anmeldetag: 07.09.2005
(51) Int. Cl.: F24H 9/12, F24H 1/18

(54) **Anschlussvorrichtung für einen Warmwasserspeicher**

(30) Priorität: 16.09.2004 DE 102004044810; 11.03.2005 DE 102005011245
(71) Anmelder: ROBERT BOSCH GMBH, 70442 Stuttgart (DE)
(72) Erfinder: Kroell, Ulrich, 72654, Neckartenzlingen (DE)

(57) **Zusammenfassung**

Es wird eine Anschlussvorrichtung für Warmwasserspeicher mit einem Anschlussstück (10) für einen Speicherbehälter vorgeschlagen. An das in den Speicherbehälter geführte Anschlussstück (10) ist eine Kaltwasserzuleitung (32) angeschlossen. Das Anschlussstück (10) umfasst ein Tauchrohr (30) mit einer ersten Mündungsöffnung (31) und ein koaxiales Rohrstück (40) mit einer zweiten Mündungsöffnung (42) sowie mindestens zwei weitere Anschlüsse (12, 41), wobei der eine Anschluss (12) mit dem Tauchrohr (30) und der andere Anschluss (41) mit dem koaxialen Rohrstück (27) verbunden ist. Die Anschlüssen (12, 41) sind in Abhängigkeit von der Art des Warmwasserspeichersystems an verschiedene Anschlussleitungen des Speicherbehälters anschließbar.

## Beschreibung

Die Erfindung betrifft eine Anschlussvorrichtung für einen Warmwasserspeicher nach dem Oberbegriff des Anspruchs 1.

### Stand der Technik

Zur Bereitstellung von warmen Brauchwasser sind verschiedene Warmwasserspeichersysteme mit direkt und indirekt beheizten Speicherbehältern bekannt. Zu den direkt beheizten Warmwasserspeichern zählen die Schichtladespeicher bzw. Schichtenspeicher, die einen Speicherbehälter aufweisen, dessen Speicherinhalt über einen Speicherladekreis erwärmt wird. Der Speicherladekreis steht dabei mit einem Wärmetauscher in Verbindung, der an der Primärseite an einen Heizkreis angeschlossen ist. Mittels des Ladekreises wird dem Speicherbehälter im unteren Bereich über einen Kaltwasserabzug abgekühltes Wasser entnommen und über einen Warmwasserzulauf dem oberen Bereich das vom Wärmetauscher erwärmte Wasser wieder zugeführt. Dem Speicherbehälter wird ferner im unteren Bereich über eine angeschlossene Kaltwasserzuleitung Kaltwasser zugeführt und im oberen Bereich über eine Warmwasserleitung an einer Zapfstelle warmes Brauchwasser entnommen.

Ein derartiger Schichtenspeicher ist aus DE 36 24 261A1 bekannt, bei dem zur Vereinfachung der Wasseranschlüsse die Kaltwasserzuleitung und der Kaltwasserabzug außerhalb des Speicherbehälters mit einem Anschlussstück zu einem gemeinsamen Wasseranschluss zusammengeführt sind. Dabei ist einer in den Ladekreis eingeschleiften Umwälzpumpe eine Anschlussstelle vorgelagert, mit der der Ladekreis über die Kaltwasserzuleitung mit einer Kaltwasserquelle verbunden ist. Der gemeinsame Wasseranschluss wird je nach Betriebsart als Kaltwasserzuführung oder Kaltwasserabzug genutzt, wobei über den Wasseranschluss im Speicherladebetrieb kaltes bzw. abgekühltes Wasser aus dem unteren Bereich des Speicherbehälters entnommen und im Warmwasserentnahmebetrieb in entgegengesetzter Strömungsrichtung Kaltwasser in den unteren Bereich des Speicherbehälters einspeist wird. Zusätzlich zu der für den gemeinsamen Wasseranschluss vorgesehen Öffnung in der Wand des Speicherbehälters ist eine zweite Öffnung für den Warmwasserzulauf und eine dritte Öffnung für den Warmwasserabzug notwendig.

Aus DE 82 30 880 U1 ist ferner eine Anschlussvorrichtung für einen Warmwasserspeicher bekannt, die ein koaxiales Anschlussstück aufweist, das einen Warmwasserauslaufstutzen und ein koaxiales Anschlussrohr für ein Entgasungsventil enthält. Das koaxiale Anschlussrohr dient zum Abführen von Gasbläschen, die bei Anordnung eines Kondensators einer Wärmepumpe im Speicherbehälter bei Leckage des Kältemittels der Wärmepumpe auftreten können.

Aufgabe der vorliegenden Erfindung ist es, ein Baukastensystem für eine Anschlussvorrichtung zu schaffen, die geeignet ist, Anschlussleitungen für verschiedene Speichersystem von Warmwasserspeichern bereitzustellen.

### Vorteile der Erfindung

Die Aufgabe der Erfindung wird mit den kennzeichnenden Merkmalen des Anspruchs 1 gelöst. Mit der Anschlussvorrichtung werden Komponenten für verschiedene Anschlussleitungen des Speicherbehälters zu einer Funktionseinheit zusammengefasst, so dass sich die Funktionseinheit als Baukastensystem für verschiedene Speichersysteme, wie bspw. Schichtladespeichersystem mit solarer Zusatzheizung, Schichtladespeichersystem ohne solarer Zusatzheizung und Speichersystem mit indirekt beheiztem Speicher verwenden lässt.

Vorteilhafte Weiterbildungen der Erfindung sind durch die Maßnahmen der Unteransprüche möglich. Als Grundausführung des Anschlussstücks ist vorgesehen, dass die Mündungsöffnung des Tauchrohres in einem unteren Abschnitt des Speicherbehälters zu liegen kommt. Zweckmäßig ist es außerdem, wenn die Mündungsöffnung des koaxialen Rohrstücks in einem Abschnitt über dem unteren Abschnitt in den Speicherbehälter mündet. Für die Ausbildung des Anschlussstücks als Baukastensystem ist es besonders zweckmäßig, wenn das Anschlussstück mindestens zwei weitere Anschlüsse aufweist und wenn dabei der eine Anschluss mit dem Tauchrohr und der andere Anschluss mit dem koaxialen Rohrstück verbunden ist. Das Anschlussstück verfügt über geeignete Mittel, mit denen sich die beiden weiteren Anschlüsse wahlweise öffnen und verschließen lassen, sodass sich die beiden weiteren Anschlüsse in Abhängigkeit von der Art des Warmwasserspeichersystems anschließen lassen. Mit dem Anschlussstück lässt sich ein direkt beheiztes Warmwasserspeichersystem in Schichtlade-Technik mit einer solaren Zusatzheizung realisieren. Hierbei ist der andere Anschluss an eine Vorlaufleitung eines Speicherladekreises angeschlossen und der eine Anschluss ist verschlossen. Dazu liegt die Mündungsöffnung des koaxialen Rohrstücks im mittleren Abschnitt des Speicherbehälters. Eine weiteres direkt beheiztes Warmwasserspeichersystem in Schichtlade-Technik lässt sich mit dem Anschlussstück dadurch realisieren, wenn der eine Anschluss an eine Vorlaufleitung eines Speicherladekreises angeschlossen ist und der andere Anschluss verschlossen ist. Eine weiteres direkt beheiztes Warmwasserspeichersystem in Schichtlade-Technik lässt sich realisieren, wenn der eine Anschluss an eine Vorlaufleitung und der andere Anschluss an eine Rücklaufleitung des Speicherladekreises angeschlossen ist. Zur Nutzung des Anschlussstücks für ein indirekt beheiztes Warmwasserspeicherladesystem wird lediglich das Tauchrohr an die Kaltwasserzuleitung angeschlossen. Die beiden weiteren Anschlüsse werden hierbei nicht benötigt und sind verschlossen.

### Ausführungsbeispiele

Ausführungsbeispiele der Erfindung sind in der Zeichnung dargestellt und in der nachfolgenden Beschreibung näher erläutert.

Es zeigen:
- Figur 1: eine Prinzipdarstellung eines Anschlussstück für einen Warmwasserspeicher,
- Figur 2: ein erstes Funktionsschema für ein Warmwasserspeichersystem mit einer solaren Zusatzheizung,
- Figur 3: ein zweites Funktionsschema für ein Warmwasserspeichersystem ohne solare Zusatzheizung,
- Figur 4: ein drittes Funktionsschema für ein Warmwasserspeichersystem ohne solare Zusatzheizung und
- Figur 5: ein viertes Funktionsschema für ein Warmwasserspeichersystem mit indirekt beheiztem Speicherbehälter.

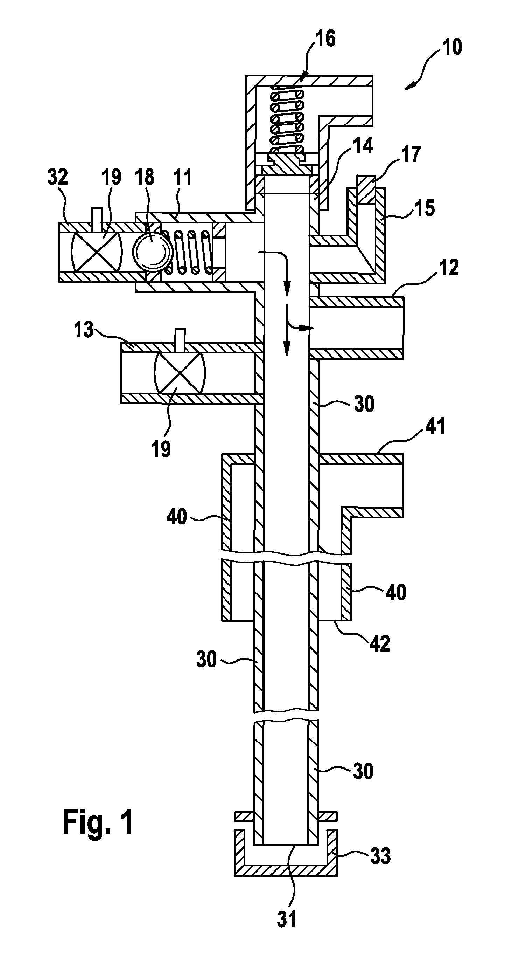

Das in Figur 1 dargestellte Anschlussstück 10 für einen Speicherbehälter 20 eines Warmwasserspeichersystems weist ein Tauchrohr 30 und ein koaxiales Rohrstück 40 auf. Das Tauchrohr 30 weist eine Mündungsöffnung 31 auf und ist beispielsweise mit einem ersten Anschluss 11 für eine Kaltwasserzuleitung 32, einem zweiten Anschluss 12 für eine später erläuterte Speicherladekreisleitung, einem dritten Anschluss 13 für eine Füll- und Entleerleitung, einem vierten Anschluss 14 für ein Sicherheitsventil 16 und einem fünften Anschluss 15 für ein Entlüftungsventil 17 versehen. Das koaxiale Rohrstücke 40 weist ein weiteren Anschluss 41 für eine ebenfalls später erläuterte Speicherladekreisleitung sowie eine ringförmiger Mündungsöffnung 42 auf, wobei das koaxiale Rohrstück 40 im oberen Bereich um das Tauchrohr 30 geführt ist. Der Mündungsöffnung 31 ist eine Strömungsleiteinrichtung 33 zugeordnet. Im ersten Anschlussstück 11 ist ein Rückschlagventil 18 angeordnet. Der Kaltwasserzuleitung 32 und dem dritten Anschluss 13 ist jeweils ein Absperrventil 19 zugeordnet.

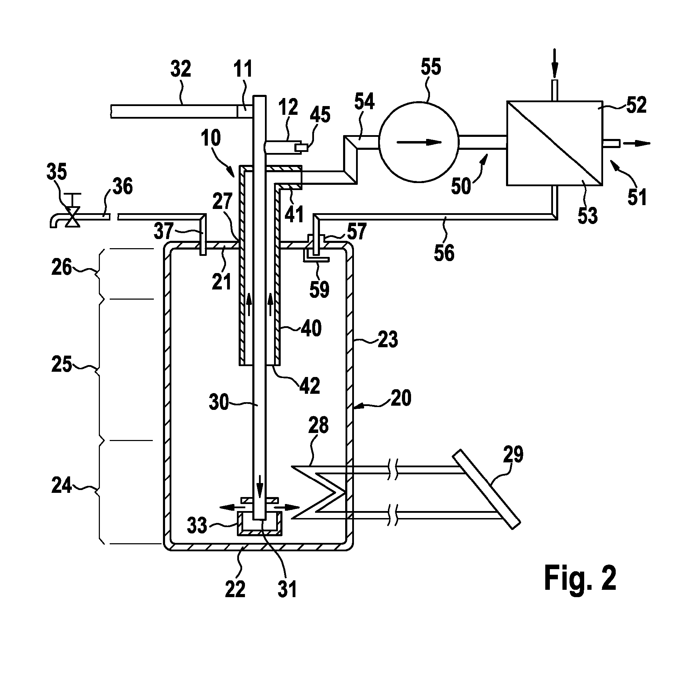

Figur 2 zeigt ein erstes Ausführungsbeispiel eines direkt beheizten Warmwasserspeichersystem mit einem Schichtenspeicher 20. Der Speicherbehälter 20 des Schichtenspeichers weist eine obere Stirnwand 21, eine untere Stirnwand 22 und eine im Wesentlichen zylindrische Seitenwand 23 auf. Die vertikale Erstreckung des Speicherbehälters 20 lässt sich im Wesentlichen in einen unteren Abschnitt 24, einen mittleren Abschnitt 25 und einen oberen Abschnitt 26 aufteilen. In der oberen Stirnwand 21 befindet sich eine Öffnung 27, in die das Anschlussstück 10 eingeführt ist, wobei das Tauchrohr 30 vertikal in den Speicherbehälter 20 hinein ragt und die Mündungsöffnung 31 dabei im unteren Abschnitt 24 liegt. Durch die obere Stirnwand 21 führt außerdem eine zu einer Zapfstelle 35 eines Brauchwassernetzes gehörende Warmwasserleitung 36, die mit einem Warmwasserauslass 37 in den oberen Abschnitt 26 des Speicherbehälters 20 mündet. Im unteren Abschnitt 24 des Speicherbehälters 20 ist ein Wärmetauscher 28 einer solaren Zusatzheizung 29 angeordnet. Die Mündungsöffnung 31 des Tauchrohres 30 liegt ebenfalls im unteren Abschnitt 24 des Speicherbehälters 20.

Der Speicherbehälter 20 ist ferner an einen Speicherladekreis 50 mit einem Wärmetauscher 51 mit einer Primärseite 52 und einer Sekundärseite 53 angeschlossen. Die Primärseite 51 ist Teil eines Heizkreises eines nicht näher dargestellten Heizgerätes. Der an die Sekundärseite 53 angeschlossene Ladekreis 50 weist eine Vorlaufleitung 54 mit einer Umwälzpumpe 55 und einer Rücklaufleitung 56 auf. Die Vorlaufleitung 54 ist an den Anschluss 41 des koaxialen Rohrstücks 40 angeschlossen. Die Mündungsöffnung 42 des koaxialen Rohrstücks 40 liegt bei der vorliegenden Ausführungsform mit einer solaren Zusatzheizung 29 im mittleren Abschnitt 25 des Speicherbehälters 20. Die Rücklaufleitung 56 führt zu einem Anschlussstutzen 57, der in der oberen Stirnwand 21 des Speicherbehälters 20 angeordnet ist, so dass die Rücklaufleitung 56 in den oberen Abschnitt 26 des Speicherbehälters 20 mündet. Dabei ist eine weitere Strömungsführung 59 der Mündung der Rücklaufleitung 56 zugeordnet.

Die an das erste Anschlussstück 11 angebundene Kaltwasserzuleitung 32 ist an ein nicht dargestelltes Trinkwassernetz angeschlossen. Bei dem Warmwasserspeichersystem gemäß Figur 2 wird der Anschluss 12 nicht benötigt. Er ist hierbei beispielsweise mit einem Verschluss 45 verschlossen. Wesentlich für das Ausführungsbeispiel in Figur 2 ist, dass die Mündungsöffnung 42 für das koaxiale Rohrstück 40 im mittleren Abschnitt 25 des Speicherbehälters 20 liegt. Durch diese Anordnung der Mündungsöffnung 42 wird gewährleistet, dass bei einer solaren Zusatzheizung 29 nicht das gesamte Speichervolumen des Speicherbehälters 20 bei einer thermischen Nachheizung über den Wärmetauscher 51 umgewälzt und damit erwärmt werden muss.

Beim Zapfen von warmen Brauchwasser wird beim Öffnen der Zapfstelle 35 Kaltwasser über die Kaltwasserzuleitung 32 und das Tauchrohr 30 in den unteren Abschnitt 24 des Speicherbehälters 20 eingeleitet. Dadurch werden die im oberen Abschnitt 26 befindliche warmen Schichten über den Warmwasserauslass 37 aus den Speicherbehälter 20 in die Warmwasserleitung 36 gedrückt und an der Zapfstelle 35 entnommen. Reicht die Erwärmung mittels der solaren Zusatzheizung 29 nicht aus, wird ein Ladevorgang mittels des Speicherladekreises 50 eingeleitet. Dazu wird anhand der von einem nicht dargestellten Temperatursensors erfassten Temperatur in einer Schichtebene des Speicherbehälters 20 mittels einer ebenfalls nicht dargestellten Steuerung die Umwälzpumpe 55 angesteuert, die dann abgekühltes Wasser aus dem mittleren Abschnitt 25 über das koaxiale Rohrstück 40 abzieht und über die Vorlaufleitung 54 dem Wärmetauscher 51 zuführt, wodurch das Wasser erwärmt und über die Rücklaufleitung 56 in den oberen Abschnitt 26 des Speicherbehälters 20 eingeschichtet wird.

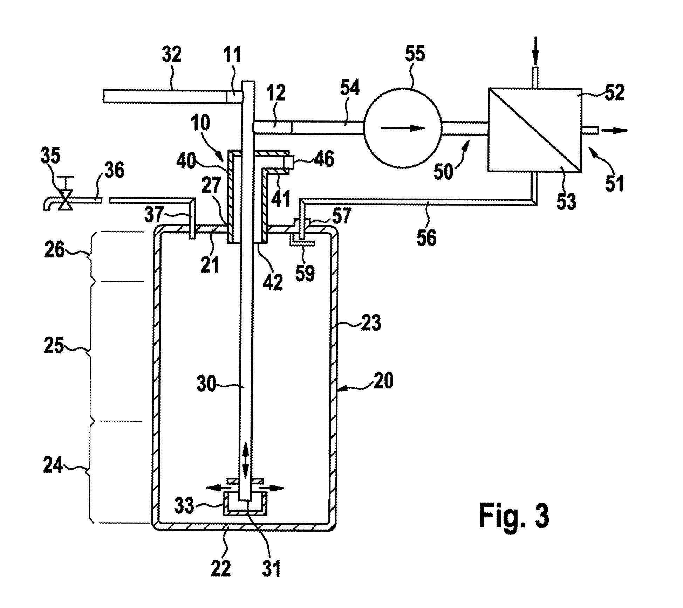

Figur 3 zeigt ein weiters Ausführungsbeispiel eines direkt beheizten Warmwasserspeichersystems. Auch hier ist der Speicherbehälter 20 an den Speicherladekreis 50 angeschlossen und arbeitet somit als Schichtladespeicher. Im Unterschied zu dem Ausfiihrungsbeispiel in Figur 2 ist hierbei jedoch keine solare Zusatzheizung im Speicherbehälter 20 vorgesehen. Dadurch muss die gesamte Erwärmung des Wassers im Speicherbehälter 20 über den Ladekreis 50 erfolgen, sodass in einem Speicherladebetrieb eine Abzugsöffnung für den Ladekreis 50 im unteren Abschnitt 25 des Speicherbehälters 20 liegen muss. Dazu wird das Tauchrohr 30 gleichzeitig als Kaltwasserabzugsleitung genutzt, wobei das Tauchrohr 30 mit dem zweiten Anschluss 12 hydraulisch verbunden ist. Dazu ist die Vorlaufleitung 54 des Ladekreises 50 an den zweiten Anschluss 12 gelegt. Dadurch wird im Speicherladebetrieb über das Tauchrohr 30 aus dem unteren Abschnitt 24 das abgekühlte Wasser abgezogen und mittels der Umwälzpumpe 55 über den Wärmetauschers 51 geführt, dort erwärmt und über die Rücklaufleitung 56 zurück in den oberen Abschnitt 26 des Speicherbehälters 20 eingeleitet. Zum Zapfen von warmen Wasser dient wie beim Ausführungsbeispiel gemäß Figur 2 die Warmwasserleitung 36 mit der Zapfstelle 35.

Zum Aufladen des Speicherbehälters 20 wird wie beim Ausführungsbeispiel in Figur 2 anhand eines im Speicherbehälter 20 angeordneten, nicht dargestellten Temperatursensors und einer nicht dargestellten Steuerung die Umwälzpumpe 55 angesteuert, die abgekühltes Wasser aus dem unteren Abschnitt 24 abzieht, das Wasser im Wärmetauschers 51 erwärmt und das erwärmte Wasser über die Rücklaufleitung 56 in den oberen Abschnitt 26 des Speicherbehälters 20 eingeschichtet wird. Ist ein Beladen des Speicherbehälters 20 bei geöffneter Zapfstelle 35 notwendig, wird an der Anschlussstelle des zweiten Anschlusses 12 ein Teil des über die Kaltwasserzuleitung 32 zugeführten Kaltwasserstroms über das Tauchrohr 30 direkt in den unteren Abschnitt 24 geleitet und ein anderer Teil des zugeführten Kaltwasserstroms am Anschluss 12 abgezweigt und über den Speicherladerkreis 50 geleitet. Dadurch wird der abgezweigte Teil des Kaltwasserstroms im Wärmetauscher 51 erwärmt und das erwärmte Wasser über die Rücklaufleitung 56 in den oberen Abschnitt 26 des Speicherbehälters 20 eingeleitet. Die über den Speicherladekreis 50 geführte Menge des Kaltwasserstroms ist abhängig vom Querschnitt der Leitungen des Speicherladekreises 50, von der Leistung der Umwälzpumpe 55, von der Wasserzulauftemperatur im Speicherladekreis 50 und von der gewünschten Einschichttemperatur am Warmwasserzulauf. Das koaxiale Rohrstück 40 wird hierbei nicht benötigt, so dass der Anschluss 41 beispielsweise mit einem Verschluss 46 verschlossen ist.

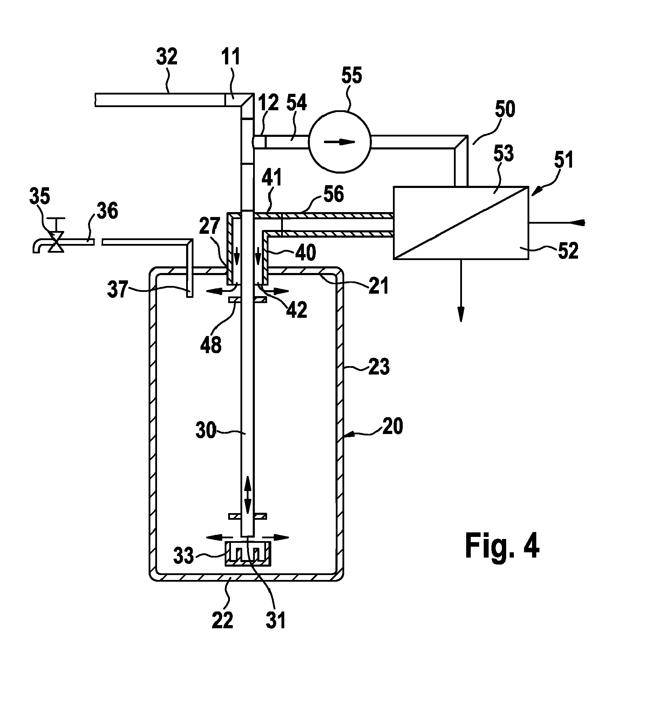

Beim einem dritten Ausführungsbeispiel gemäß Figur 4, das ebenfalls ein direkt beheiztes Warmwasserspeichersystem in Schichtlade-Technik ist, ist sowohl der zweite Anschluss 12 des Tauchrohres 30 als auch der weitere Anschluss 41 des koaxialen Rohrstücks 40 an den Speicherladekreis 50 angeschlossen, wobei die Vorlaufleitung 54 an dem mit dem Tauchrohr 40 in Verbindung stehenden Anschluss 12 liegt und die Rücklaufleitung 56 an den weiteren Anschluss 41 des koaxialen Rohrstücks 40 gelegt ist. Dadurch strömt das über die Rücklaufleitung 56 in den Speicherbehälter 20 zurückströmende erwärmte Wasser durch das koaxiale Rohrstück 40 über die Mündungsöffnung 42 in den oberen Abschnitt 26 des Speicherbehälters zurück. Hierbei ist der Mündungsöffnung 42 eine weitere Strömungsführung 48 zugeordnet. Der Speicherladebetrieb erfolgt im Wesentlichen wie beim Ausführungsbeispiel in Figur 3. Ein Unterscheid besteht jedoch darin, dass das im Speicherladebetrieb erwärmet Wasser über das koaxiale Rohrstück 40 in den oberen Abschnitt 26 des Speicherbehälters 20 eingeleitet wird.

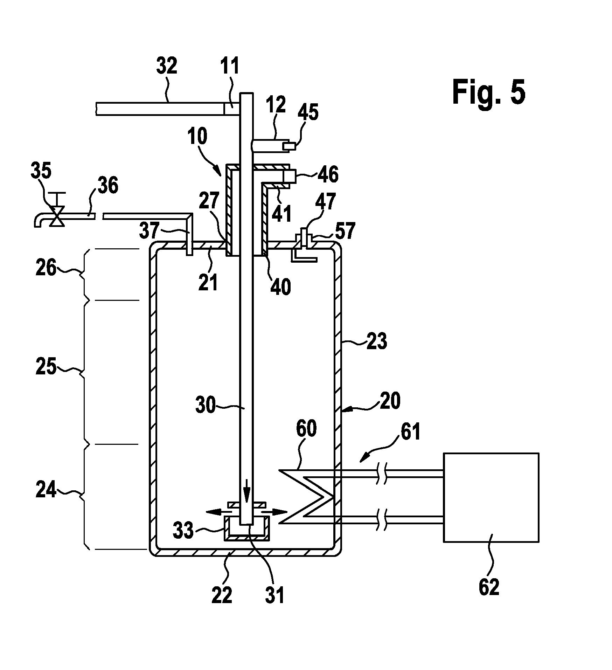

Ein viertes Ausführungsbeispiel geht aus Figur 5 hervor. Hierbei handelt es sich um ein indirekt beheiztes Warmwasserspeichersystem. Bei diesem Ausführungsbeispiel ist im unteren Abschnitt 24 ein Wärmetauscher 60 eines Brauchwasserheizkreises 61 eines Heizgerätes 62 angeordnet. Das Anschlussstück 10 dient dabei ausschließlich als Tauchrohr 30, das mit der Mündungsöffnung 31 ebenfalls in den unteren Abschnitt 24 des Speicherbehälters 20 mündet. Bei dieser Nutzung des Anschlussstücks 10 werden die beiden Anschlüsse 12 und 41 nicht benötigt, so dass diese beispielsweise mit den Verschlüssen 45 und 46 verschlossen sind. Da auch der Anschlussstutzen 57 ohne Anschluss ist, ist dieser ebenfalls mit einem weiteren Verschluss 47 geschlossen. Das Erwärmen des Wassers im Speicherbehälter 20 erfolgt hierbei mittels des Wärmetauschers 60, indem in einem Brauchwasserbetrieb über den Brauchwasserheizkreis 61 der Wärmetauscher 60 vom Heizgerät 62 erwärmet wird. Beim Zapfen von warmen Brauchwasser wird beim Öffnen der Zapfstelle 35 Kaltwasser über die Kaltwasserzuleitung 32 und das Tauchrohr 30 in den unteren Abschnitt 24 des Speicherbehälters 20 geleitet, so dass das im oberen Abschnitt 26 sich befindende warme Wasser in den Warmwasserauslass 37 und in die Warmwasserleitung 36 drückt und an der Zapfstelle 35 entnommen werden kann.

### Bezugszeichenliste

- 10: Anschlussstück
- 11: erster Anschluss
- 12: zweiter Anschluss
- 13: dritter Anschluss
- 14: vierter Anschluss
- 15: fünfter Anschluss
- 16: Sicherheitsventil
- 17: Entlüftungsventil
- 18: Rückschlagventil
- 19: Absperrventil
- 20: Speicherbehälter
- 21: obere Stirnwand
- 22: untere Stirnwand
- 23: zylindrischer Wandabschnitt
- 24: unterer Abschnitt
- 25: mittlerer Abschnitt
- 26: oberer Abschnitt
- 27: Öffnung
- 28: Wärmetauscher
- 29: solare Zusatzheizung
- 30: Tauchrohr
- 31: erste Mündungsöffnung
- 32: Kaltwasserzuleitung
- 33: Strömungsführung
- 35: Zapfstelle
- 36: Warmwasserleitung
- 37: Warmwasserauslass
- 40: koaxiales Rohrstück
- 41: weiterer Anschluss
- 42: zweite Mündungsöffnung
- 45: Verschluss
- 46: Verschluss

- 47: weiterer Verschluss
- 48: weitere Strömungsführung
- 50: Speicherladekreis
- 51: Wärmetauscher
- 52: Primärseite
- 53: Sekundärseite
- 54: Vorlaufleitung
- 55: Umwälzpumpe
- 56: Rücklaufleitung
- 57: Anschlussstutzen
- 59: weitere Strömungsfühnmg
- 60: Wärmetauscher
- 61: Brauchwasserheizkreis
- 62: Heizgerät

## Patentansprüche

1. Anschlussvorrichtung für Warmwasserspeicher mit einem Anschlussstück (10), das in einen Speicherbehälter (30) führt und an das eine Kaltwasserzuleitung (32) angeschlossen ist, wobei der Speicherbehälter horizontal übereinander liegend einen unteren Abschnitt, einen mittleren Abschnitt und einen oberen Abschnitt für das gespeicherte warme Wasser aufweist, und wobei der Speicherbehälter an eine Warmwasserleitung mit mindestens einer Zapfstelle angeschlossen ist, **dadurch gekennzeichnet, dass** das Anschlussstück (10) ein Tauchrohr (30) mit einer ersten Mündungsöffnung (31) und ein koaxiales Rohrstück (40) mit einer zweiten Mündungsöffnung (42) umfasst, und dass die Mündungsöffnungen (31, 42) in unterschiedlichen Abschnitten (24, 25, 26) des Speicherbehälters (20) liegen.

2. Anschlussvorrichtung nach Anspruch 1, **dadurch gekennzeichnet, dass** die Mündungsöffnung (31) des Tauchrohres (30) in einem unteren Abschnitt (24) des Speicherbehälters (20) liegt.

3. Anschlussvorrichtung nach Anspruch 1 oder 2, **dadurch gekennzeichnet, dass** die Mündungsöffnung (42) des koaxialen Rohrstücks (40) in einem Abschnitt über dem unteren Abschnitt (24) in den Speicherbehälter (20) mündet.

4. Anschlussvorrichtung nach Anspruch 1, 2 oder 3, **dadurch gekennzeichnet, dass** das Anschlussstück (10) mindestens zwei weitere Anschlüsse (12, 41) aufweist und dass der eine Anschluss (12) mit dem Tauchrohr (30) und der andere Anschluss (41) mit dem koaxialen Rohrstück (40) verbunden ist

5. Anschlussvorrichtung nach Anspruch 4, **dadurch gekennzeichnet, dass** das Anschlussstück (10) über geeignete Mittel verfügt, mit denen sich die beiden weiteren Anschlüsse (12, 41) wahlweise öffnen und verschließen lassen, sodass die beiden weiteren Anschlüsse (12, 41) in Abhängigkeit von der Art des Warmwasserspeichersystems anschließbar sind.

6. Anschlussvorrichtung nach Anspruch 4 oder 5, **dadurch gekennzeichnet, dass** der andere Anschluss (41) an eine Vorlaufleitung (54) eines Speicherladekreises (50) angeschlossen und der eine Anschluss (12) ohne Funktion ist.

7. Anschlussvorrichtung nach Anspruch 6, **dadurch gekennzeichnet, dass** die Mündungsöffnung (42) des koaxialen Rohrstücks (40) im mittleren Abschnitt (25) des Speicherbehälters (20) liegt.

8. Anschlussvorrichtung nach Anspruch 4 oder 5, **dadurch gekennzeichnet, dass** der eine Anschluss (12) an eine Vorlaufleitung (54) eines Speicherladekreises (50) angeschlossen und der andere Anschluss (41) ohne Funktion ist.

9. Anschlussvorrichtung nach Anspruch 4 oder 5, **dadurch gekennzeichnet, dass** der eine Anschluss (12) an eine Vorlaufleitung (54) eines Speicherladekreises (50) und der andere Anschluss (41) an eine Rücklaufleitung (56) des Speicherladekreises (50) angeschlossen ist.

10. Anschlussvorrichtung nach Anspruch 4 oder5, **dadurch gekennzeichnet, dass** beide Anschlüsse (12, 41) ohne Funktion sind.
